Europäisches Patentamt

European Patent Office

Office européen des brevets

(19)

(11) Veröffentlichungsnummer: **0 218 101**
**B1**

(12) **EUROPÄISCHE PATENTSCHRIFT**

(45) Veröffentlichungstag der Patentschrift: **28.02.90**

(21) Anmeldenummer: **86112270.3**

(22) Anmeldetag: **04.09.86**

(51) Int. Cl.⁵: **B 29 C 45/42**

(54) **Spritzgießmaschine mit Spritzling-Entnahmevorrichtung**

(30) Priorität: **11.09.85 DE 3532299**

(43) Veröffentlichungstag der Anmeldung:
**15.04.87 Patentblatt 87/16**

(45) Bekanntmachung des Hinweises auf die
Patenterteilung:
**28.02.90 Patentblatt 90/09**

(84) Benannte Vertragsstaaten:
**AT BE CH DE FR GB IT LI LU NL SE**

(56) Entgegenhaltungen:
**EP-A-0 083 766**
**DE-A-2 450 218**
**DE-A-2 642 691**
**DE-A-3 432 262**

**Plastrerarbeiter 30. Jahrgang 1979 Nr. 8**
**"Automation an Spritzgiessmaschinen", Seiten**
**453-457**

(73) Patentinhaber: **Battenfeld Kunststoffmaschinen**
**Ges.m.b.H.**
**Wiener-Neustädter-Strasse 81**
**AT-2542 Kottingbrunn (AT)**

(72) Erfinder: **Heindl, Friedrich**
**Dörflergasse 43**
**A-2500 Baden (AT)**
Erfinder: **Hellmann, Wolf Dieter**
**Schlehdornweg 13**
**D-8432 Beilngries (DE)**

(74) Vertreter: **Müller, Gerd et al**
**Patentanwälte HEMMERICH-MÜLLER-GROSSE-**
**POLLMEIER-MEY Hammerstrasse 2**
**D-5900 Siegen 1 (DE)**

Courier Press, Leamington Spa, England.

## Beschreibung

Die Erfindung betrifft eine Spritzgießmaschine mit einer Vorrichtung zum linearen Spritzling-Entnahme aus dem geöffenten Spritzwerkzeug, bei welcher an einem oberhalb der Schließeinheit für das Spritzwerkzeug ausgerichteten Führungsbett ein Kreuzsupport bzw. Schlitten mit einem von ihm getragenen Hängeglied verfahrbar sitzt, das an seinem unteren Ende einen in Aufwärtsrichtung verstellbaren Spritzling-Greifer trägt, welcher wiederum um mindestens zwei jeweils rechtwinklig zueinander gerichtete Gelenke relativ zum Hängeglied verstellbar ist, wobei das Führungsbett für den Kreuzsupport oder Schlitten parallel zu Betätigungsrichtung der Schließeinheit bzw. zur Längsachse der Spritzgießmaschine ausgerichtet ist.

Eine Spritzling-Entnahmevorrichtung dieser Art ist in der Zeitschrift "Plastverarbeiter" 1985, Nr. 6, Seiten 106 bis 109 beschrieben.

Diese Spritzling-Entnahmevorrichtungen arbeiten dabei mit einem entlang dem Führungsbett verfahrbaren Kreuzsupport, der einen hohen technischen Aufwand erfordert und außerdem ein beträchtliches Konstruktionsgewicht bedingt. Der das Hängeglied tragende Schlitten des auf dem Führungsbett sitzenden Kreuzsupports ist als in Auf- und Abwärtsrichtung verfahrbarer Kragarm bzw. Ausleger ausgeführt, welcher sich mit relativ großer Länge oberhalb der Schließeinheit parallel zu deren Betätigungsrichtung erstreckt und die Führung für einen dritten Schlitten bildet, der das eigentliche Hängeglied prägt.

Er ist offensichtlich, daß sich bei der Ausstattung von Spritzgießmaschinen mit diesen bekannten Spritzling-Entnahmevorrichtungen häufig Schwierigkeiten ergeben, weil nicht nur das hohe Konstruktionsgewicht derselben in die Spritzgießmaschine eingeleitet werden muß, sondern weil auch seitlich neben der Spritzgießmaschine eine relativ großer Freiraum benötigt wird, um die mittels des Greifers erfaßten und aus dem Spritzwerkzeug heraustransportierten Spritzlinge ablegen zu können.

Eine ähnliche Spritzling-Entnahmevorrichtung ist auch bekannt durch DE—A—34 32 262. Auch hier ist nämlich das Führungsbett für den das Hängeglied tragenden Schlitten in einer quer zur Betätigungsrichtung der Schließeinheit gerichteten Lage unmittelbar auf der Oberseite einer Werkzeugträgerplatte dieser Schließeinheit aufliegend montiert, und zwar so, daß das Führungsbett mit dem größten Teil seiner Länge frei nach der Seite hin über die Längsbegrenzung der Schließeinheit hinausragt und dort einen entsprechenden Freiraum für die Transportbewegung der Spritzling-Entnahmevorrichtung benötigt.

Der Erfindung liegt die Aufgabe zugrunde, für Spritzgießmaschinen eine Spritzling-Entnahmevorrichtung der anfangs spezifizierten Gattung zu schaffen, die sich nicht nur mit baulich vermindertem Aufwand, sondern auch mit einem verringerten Konstruktionsgewicht realisieren läßt. Zugleich wird aber auch eine Zuordnung der Spritzling-Entnahmevorrichtung zur Spritzgießmaschine angestrebt, die mit minimalem Einbauraum seitlich neben der Spritzgießmaschine auskommt und somit eine relativ enge Nebeneinander-Anordnung einander benachbarter Spritzgießmaschinen ermöglicht.

Die Lösung dieser Aufgabe basiert nach der Erfindung auf den Kennzeichnungsmerkmalen des Anspruchs 1 und wird dadurch erreicht, daß das Führungsbett über mehrere Tragarme unmittelbar an bzw. auf dem Gestell oder Gehäuse der Spritzgießmaschine befestigt ist, daß dabei das Führungsbett zumindest mit seinem einen Ende bis über die Stirnseite der Spritzgießmaschine bzw. über deren Schließeinheit für das Spritzwerkzeug hinausragt, und daß der Kreuzsupport bzw. Schlitten einen Träger oder Ausleger hält oder bildet, an dessen freiem Ende das Hängeglied ausschließlich auf einer durch die Längsachse der Schließeinheit gehenden Vertikalebene höhenverstellbar angeordnet ist.

Durch diese erfindungsgemäßen Lösungsmerkmale wird eine als Linear-Entnahmegerät arbeitende, baulich einfache Spritzling-Entnahmevorrichtung geschaffen, die ein geringes Konstruktionsgewicht hat und dabei auf einfache Weise sicherstellt, daß die Ablage der aus dem Spritzwerkzeug entnommenen Spritzlinge vor der Stirnseite und/oder hinter der Rückseite der Spritzgießmaschine erfolgen kann, wo eine günstige Anordnung von Stapel- und/oder Fördervorrichtungen möglich ist. Eine relativ enge Nebeneinander-Anordnung einander benachbarter Spritzgießmaschinen ist hierdurch möglich.

Da diese Spritzling-Entnahmevorrichtung im wesentlichen nur mit linearen Bewegungsabläufen arbeitet, kann sie exakt und problemlos mit Programmsteuerung betrieben werden. Durch die freie Programmierbarkeit der Bewegungsabläufe lassen sich dabei kürzeste Verfahrwege erzielen.

Nach Anspruch 2 besteht andererseits aber die Möglichkeit, daß das Führungsbett auch über die Rückseite der Spritzgießmaschine hinausgeführt ist, damit sich gegebenenfalls auch dort die aus dem Spritzwerkzeug entnommene Spritzlinge mittels der Spritzling-Entnahmevorrichtung ablegen lassen.

Eine andere bauliche Weiterbildung der erfindungsgemäßen Spritzling-Entnahmevorrichtung wird nach Anspruch 3 dadurch gesehen, daß der Träger oder Ausleger an einer vertikalen Führungsbahn des Schlittens ausschließlich in Auf- und Abwärtsrichtung verstellbar gehalten ist, wobei nach Anspruch 4 gegebenenfalls die wirksame Länge des Hängegliedes relativ zum Träger oder Ausleger veränderbar ist. Selbstverständlich läßt sich nach Anspruch 5 die Spritzling-Entnahmevorrichtung auch so auslegen, daß das Hängeglied aus einem als Kardan- bzw. Ellipsenlenker oder aber als Pantograph ausgelegten Geradführungs-Koppelgetriebe besteht, dessen Schiebeführung am Schlitten bzw. an dem von diesem gehaltenen Träger oder Ausleger quer zu seiner eigenen Bewegungsrichtung ausgerichtet ist.

Aus diesen Maßnahmen erwächst der Vorteil, daß anstelle eines Kreuzsupports nur ein einfacher, nämlich längs des Führungsbettes beweglicher Schlitten benötigt wird, dessen Bauhöhe die Bauhöhe des Führungsbettes nicht oder nur geringfügig überschreitet und der als Aufhängung für das Hängeglied nur einen baulich leichten Ausleger benötigt, dessen Ausladung die Baubreite der Schließeinheit nicht überschreitet.

Der Gegenstand der Erfindung wird anschließend unter Bezugnahme auf in der Zeichnung dargestellte Ausführungsbeispiele eingehend erläutert. Hierbei zeigen

Figur 1 in schematisch vereinfachter Seitenansicht eine Spritzgießmaschine mit zugeordneter Spritzling-Entnahmevorrichtung,

Figur 2 eine Stirnansicht der Spritzgießmaschine mit zugehöriger Spritzling-Entnahmevorrichtung in Pfeilrichtung II der Fig. 1,

Figur 3 die Anordnung nach den Fig. 1 und 2 in der Draufsicht und

Figur 4 in einer der Fig. 1 entsprechenden Seitenansicht eine Spritzgießmaschine mit einer zugeordneten Spritzling-Entnahmevorrichtung in abgewandelter Bauart.

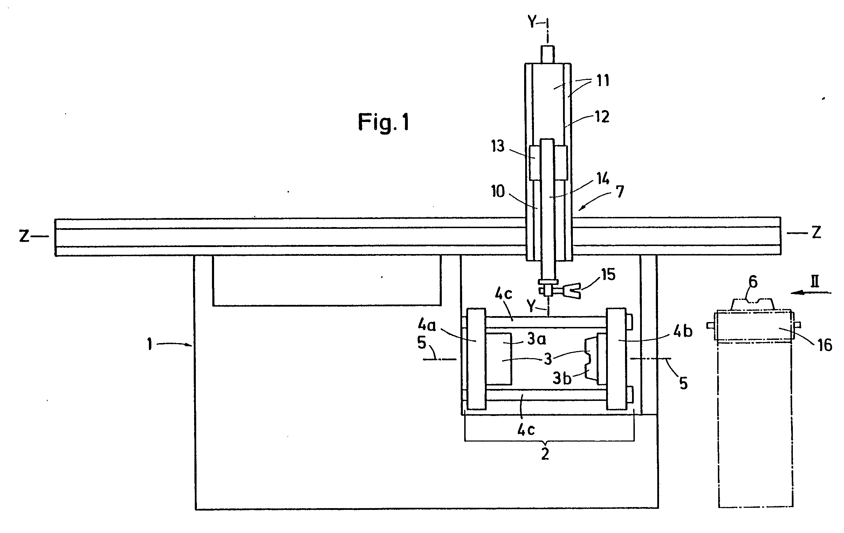

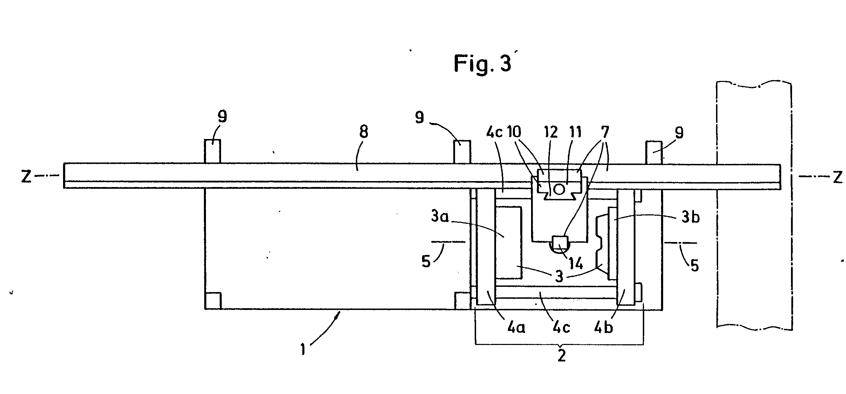

Die in der Zeichnung dargestellte Spritzgießmaschine 1 ist an ihrem einen Ende mit einer Schließeinheit 2 für das Spritzgießwerkzeug 3 ausgestattet, welches zwei Formhälften 3a und 3b aufweist. Während die Formhälfte 3a auf einer Werkzeugträgerplatte 4a der Schließeinheit 2 sitzt, die entlang Führungsstangen 4c horizontal verstellbar ist, wird die Formhälfte 3b auf einer Werkzeugträgerplatte 4b befestigt, die auf den Führungsstangen 4c ortsfest sitzt. Mittels der beweglichen Werkzeugträgerplatte 4a läßt sich das Spritzwerkzeug 3 innerhalb der Schließeinheit 2 in Richtung der Längsachse 5—5 wahlweise öffnen und schließen. In den Fig. 1 und 3 der Zeichnung ist dabei das Spritzwerkzeug 3 in geöffnetem Zustand, also mit auseinandergefahrenen Formhälften 3a und 3b gezeigt. Zur Entnahme der Spritzlinge 6 aus dem Spritzwerkzeug 3 dient eine Spritzling-Entnahmevorrichtung 7, die der Spritzgießmaschine 1 zugeordnet ist.

Die Spritzling-Entnahmevorrichtung 7 weist ein ortsfestes Führungsbett 8 auf, das sich parallel zur Betätigungsrichtung der Schließeinheit 2, also parallel zu deren Längsachse 5—5 erstreckt und auch zur Längsrichtung der Spritzgießmaschine 1 ausgerichtet ist. Das Führungsbett 8 ist dabei über mehrere Tragarme 9 mit dem Gestell oder Gehäuse der Spritzgießmaschine 1 starr verbunden.

Nach den Fig. 1 bis 3 der Zeichnung trägt das Führungsbett 8 einen daran längsbeweglichen Hauptschlitten 10, der einen vertikal aufwärts gerichteten Holm 11 aufweist, an dem sich eine Führungsbahn 12 befindet, auf welcher wiederum ein Schlitten 13 verschiebbar angeordnet ist. Der Hauptschlitten 10 und der auf dessen Holm 11 geführte Schlitten 13 bilden miteinander gewissermaßen einen Kreuzsupport, der zwei rechtwinklig zueinander gerichtete Bewegungsachsen, nämlich die horizontale Z-Achse und die vertikale Y-Achse aufweist.

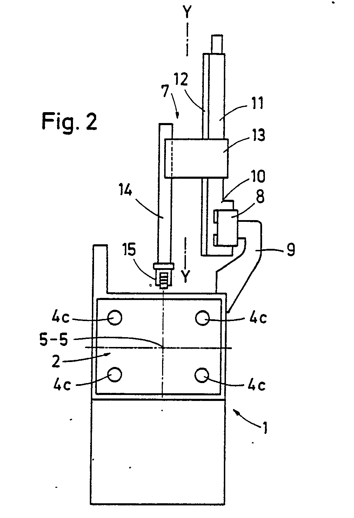

Der Schlitten 13 bildet einen Träger oder Ausleger, an dessen freiem Ende ein Hängeglied 14 angeordnet ist, das an seinem unteren Ende einen Spritzling-Greifer trägt, der einerseits um seine Längsachse drehbar und andererseits um eine Querachse verschwenkbar mit dem Hängeglied 14 in Verbindung steht. Die Anordnung des Spritzling-Greifers 15 am Hängeglied 14 ist so getroffen, daß seine Längsachse mit einer Vertikalebene zusammenfällt, die durch die Längsachse 5—5 der Schließeinheit 2 geht, wie das deutlich der Fig. 2 entnommen werden kann.

Mittels des Schlittens 13 kann das Hängeglied 14 und der daran aufgehängte Spritzling-Greifer 15 in Vertikalrichtung zwischen den Führungsstangen 4c hindurch in die Schließeinheit 2 abgesenkt werden, wenn diese geöffnet ist, also ihre Werkzeugträgerplatten 4a und 4b mit den beiden Formhälften 3a und 3b des Spritzwerkzeuges 3 auseinandergefahren sind, wie das die Fig. 1 und 3 zeigen. Mittels des Greifers 15 lassen sich dann die einzelnen Spritzlinge programmgesteuert aus dem geöffneten Spritzwerkzeug 3 entnehmen und aus dem Arbeitsbereich der Spritzgießmaschine 1 abtransportieren. Um das zu ermöglichen, ist das Führungsbett 8 der Spritzling-Entnahmevorrichtung 7 mindestens über die Stirnseite der Spritzgießmaschine 1 bzw. über deren Schließeinheit 2 hinaus verlängert. Vorzugsweise kann aber das Führungsbett 8 auch über die Rückseite der Spritzgießmaschine 1 hinausgeführt werden. Es ist hierdurch möglich, die einzelnen Spritzlinge 6 mit Hilfe des Hauptschlittens 10 aus dem Standortbereich der Spritzgießmaschine 1 nach vorne oder hinten herauszubewegen und dort auf eine Fördervorrichtung 16 oder auch auf einen Stapeltisch abzulegen. Vorteilhaft ist es, wenn das Hängeglied 14 an dem als Träger oder Ausleger wirksamen Schlitten 13 des Kreuzsupports in seiner wirksamen Länge veränderbar angeordnet ist, damit es in optimaler Weise an unterschiedliche Arbeitsbedingungen angepaßt werden kann, ohne daß hierdurch der Bewegungsbereich des Schlittens 13 in Richtung der Y-Achse beeinträchtigt wird.

Die vorstehend beschriebene Anordnung der Spritzling-Entnahmevorrichtung 7 relativ zur Spritzgießmaschine 1 ist nicht nur dort einsatzfähig, wo das Hängeglied 14 von einem Kreuzsupport gehalten und geführt wird. Vielmehr kann sie auch dann zum Einsatz gelangen, wenn das Hängeglied aus einem als Kardan- bzw. Ellipsenlenker oder auch als Pantograph ausgelegten Geradführungs-Koppelgetriebe 17 besteht, dessen Schiebeführung 18 sich an einem Schlitten 19 befindet, der längs dem Führungsbett 8 beweglich ist. Die Schiebeführung 18 für das Geradführungs-Koppelgetriebe erstreckt sich dabei am Schlitten 19 parallel zum Führungsbett 8, aber im wesentlichen quer zur Bewegungsrichtung des freien Endes des Hängegliedes 14, an welchem sich der Spritzling-Greifer 15 befindet.

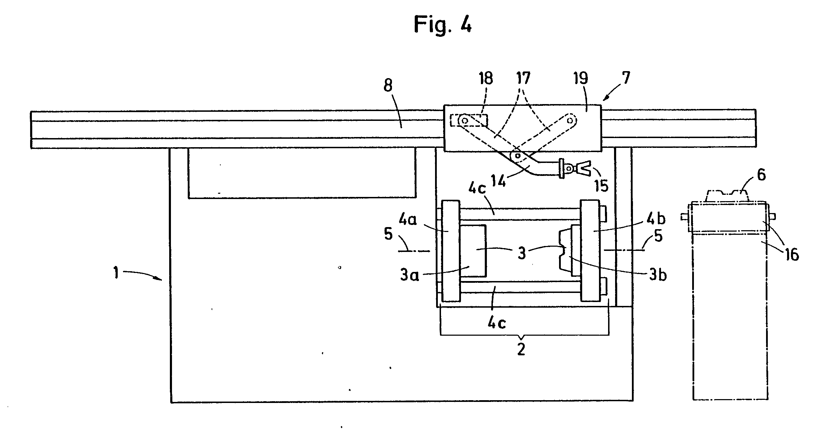

Aus Fig. 4 ist ersichtlich, daß durch die Ausbildung des Hängegliedes 14 als Geradführungs-Koppelgetriebe eine weitere bauliche Vereinfachung der Spritzling-Entnahmevorrichtung 7 erreicht wird, weil diese keinen Kreuzsupport benötigt, der aus dem Hauptschlitten 10 mit Vertikalholm 11 und dem Zusatzschlitten 13 besteht. Da nur der Schlitten 19 als das Hängeglied 14 haltender Träger oder Ausleger benötigt wird, ergibt sich bei der Spritzling-Entnahmevorrichtung 7 nach Fig. 4 gegenüber derjenigen nach den Fig. 1 bis 3 eine beträchtlich verminderte Bauhöhe, so daß sie auch bei Aufstellung der Spritzgießmaschine 1 in relativ niedrigen Hallen benutzbar ist.

**Patentansprüche**

1. Spritzgießmaschine mit einer Vorrichtung zur linearen Spritzling-Entnahme aus dem geöffneten Spritzwerkzeug, bei welcher an einem oberhalb der Schließeinheit für das Spritzwerkzeug ausgerichteten Führungsbett ein Kreuzsupport bzw. Schlitten mit einem von ihm getragenen Hängeglied verfahrbar sitzt, das an seinem unteren Ende einen in Aufwärtsrichtung verstellbaren Spritzling-Greifer trägt, welcher wiederum um mindestens zwei jeweils rechtwinklig zueinander gerichtete Gelenke relativ zum Hängeglied verstellbar ist, wobei das Führungsbett für den Kreuzsupport oder Schlitten parallel zur Betätigungseinrichtung der Schließeinheit bzw. zur Längsachse der Spritzgießmaschine ausgerichtet ist, dadurch gekennzeichnet, daß das Führungsbett (8) über mehrere Tragarme (9) unmittelbar an bzw. auf dem Gestell oder Gehäuse der Spritzgießmaschine (1) befestigt ist, daß dabei das Führungsbett (8) zumindest mit seinem einen Ende bis über die Stirnseite der Spritzgießmaschine (1) bzw. über deren Schließeinheit (2) für das Spritzwerkzeug (3) hinausragt, und daß der Kreuzsupport (10 bis 13 bzw. der Schlitten 19) einen Träger oder Ausleger (13) hält oder bildet, an dessen freiem Ende das Hängeglied (14) ausschließlich auf einer durch die Längsachse (5—5) der Schließeinheit (2) gehenden Vertikalebene höhenverstellbar angeordnet ist.

2. Spritzgießmaschine nach Anspruch 1, dadurch gekennzeichnet, daß das Führungsbett (8) auch über die Rückseite der Spritzgießmaschine (1) hinausgeführt ist (Fig. 1, 3 und 4).

3. Spritzgießmaschine nach Anspruch 1 oder 2, dadurch gekennzeichnet, daß der Träger oder Ausleger (13) an einer vertikalen Führungsbahn (12) des Hauptschlittens (10, 11) ausschließlich in Auf- und Abwärtsrichtung verstellbar gehalten ist (Fig. 1 bis 3).

4. Spritzgießmaschine nach einem der Ansprüche 1 bis 3, dadurch gekennzeichnet, daß die wirksame Länge des Hängegliedes (14) relativ zum Träger oder Ausleger (13) veränderbar ist.

5. Spritzgießmaschine nach einem der Ansprüche 1 oder 2, dadurch gekennzeichnet, daß das Hängeglied (14) aus einem als Kardan- bzw. Ellipsenlenker-Koppelgetriebe (17) besteht, dessen Schiebeführung (18) am Schlitten (19) parallel zum Führungsbett (8), aber quer zur Bewegungsrichtung seines den Spritzling-Greifer (15) tragenden Endes ausgerichtet ist (Fig. 4).

**Revendications**

1. Machine de moulage par injection comprenant un dispositif qui assure, après ouverture de l'outil d'injection, l'extraction linéaire des moulages obtenus par injection et qui comporte, monté de manière à pouvoir se déplacer sur un lit de guidage situé au-dessus de l'unité de fermeture de l'outil d'injection, un support à chariots croisés, ou une pièce coulissante, qui porte un organe de suspension qui, à son extrémité inférieure, porte une pièce de levage des moulages obtenus par injection qui peut être déplacée dans le sens vertical et peut également se déplacer par rapport à l'organe de suspension, par rotation autour d'au moins deux articulations perpendiculaires l'une de l'autre, le lit de guidage du support à chariots croisés ou de la pièce coulissante étant orientés parallèlement à la direction de fonctionnement de l'unité de fermeture, c'est-à-dire à l'axe longitudinal de la machine de moulage par injection, caractérisée en ce que le lit de guidage (8) est fixé par plusieurs bras porteurs (9) directement au ou sur le bâti ou l'enveloppe de la machine de moulage par injection, en ce que le lit de guidage (8) dépasse, au moins à l'une de ses extrémités, le côté frontal de la machine de moulage par injection (1) ou l'unité de fermeture (2) de l'outil d'injection (3) et en ce que le support à chariots croisés (10 à 13) ou la pièce coulissante (19) maintient ou constitue un support ou une flèche (13) à l'extrémité libre desquels l'organe de suspension (14) est monté de manière à se déplacer en hauteur exlusivement dans un plan vertical passant par l'axe longitudinal (5—5) de l'unité de fermeture (2).

2. Machine de moulage par injection selon la revendication 1, caractérisé en ce que le lit de guidage (8) dépasse également le côté arrière de la machine de moulage par injection (1) (Figures 1, 3 et 4).

3. Machine de moulage par injection selon l'une des revendications 1 ou 2, caractérisée en ce que le support ou la flèche (13) sont montés sur un dispositif de guidage vertical (12) de la pièce coulissante principale (10, 11) de manière à pouvoir être déplacés exclusivement vers le haut et vers le bas (Figures 1 à 3).

4. Machine de moulage par injection selon l'une des revendications 1 à 3, caractérisée en ce que la longueur efficace de l'organe de suspension (14) par rapport au support ou à la flèche (13) est variable.

5. Machine de moulage par injection selon l'une des revendications 1 ou 2, caractérisée en ce que l'organe de suspension (14) est constitué par un mécanisme d'accouplement (17) qui comporte un joint universel ou ellipsoïdal et dont le dispositif de guidage (18) sur la pièce coulissante (19) est orienté parallèlement au lit de guidage (8), mais transversalement par rapport à la direction de déplacement de son extrémité qui porte la pièce de préhension et de levage (15) du moulage obtenu par injection (Figure 4).

**Claims**

1. Injection-moulding machine with a means for the linear extraction of the moulding from the opened injection tool, in which a cross support or slide with a suspension member carried thereby is displaceably seated on a guide bed fitted above the closure unit for the injection tool, which member carries at its lower end a moulding gripper adjustable in the upward direction, which gripper in its turn is adjustable relatively to the suspension member about at least two joints directed at right-angles to one another, the guide bed for the cross support or slide being directed parallel to the direction of actuation of the closure unit or relatively to the longitudinal axis of the injection moulding machine, characterised in that the guide bed (8) is fixed by a plurality of support arms (9) directly at or on the frame or housing of the injection moulding machine (1), that in this way the guide bed (8) projects, at least at its one end, to beyond the front end of the injection moulding machine (1) or respectively beyond the closure unit (2) for the injection tool (3), and that the cross support (10 to 13), or respectively the carriage (19), holds or forms a support or arm (13), on the free end of which the suspension member (14) is arranged so as to be adjustable in height solely on a vertical plane passing through the longitudinal axis (5—5) of the closure unit (2).

2. Injection moulding machine according to claim 1, characterised in that the guide bed (8) is also guided back above the rear side of the injection moulding machine (1) (Figs. 1, 3 and 4).

3. Injection moulding machine according to claim 1 or 2, characterised in that the support or arm (13) is held so as to be adjustable exclusively in the upward and downward direction on a vertical guide track (12) of the main carriage (10, 11) (Figs. 1 to 3).

4. Injection moulding machine according one of the claims 1 to 3, characterised in that the effective length of the suspension member (14) is variable relatively to the support or arm (13).

5. Injection moulding machine according to claim 1 or 2, characterised in that suspension or hanger member (14) consists of a couling gear (17) designed as a cardan or elliptical link, of which the slide guideway (18) on the member (19) is directed parallel to the guide bed (8), but transversely of the direction of movement of its end carrying the moulding gripper (15) (Fig. 4).

Fig.1

EP 0 218 101 B1

Fig. 2

Fig. 3

EP 0 218 101 B1

Fig. 4